# EUROPEAN PATENT SPECIFICATION

(11) **EP 1 041 791 B1**
(45) Date of publication and mention of the grant of the patent: **08.04.2009**
(21) Application number: 00301937.9
(22) Date of filing: 09.03.2000
(51) Int. Cl.: H04L 29/06, H04L 12/18

(54) **Data receiver and control system**
Datenempfänger und steuereinrichtung
Récepteur de données et installation de contrôle

(30) Priority: 18.03.1999 GB 9906378
(43) Date of publication of application: 04.10.2000
(73) Proprietor: Pace Plc, Saltaire Shipley West Yorkshire BD18 3LF (GB)
(72) Inventor: Cragie, Robert, Holmfirth, Huddersfield HD7 1AG (GB)
(74) Representative: Wood, Graham

(56) References cited:
- US-A- 5 831 664
- BISSELL R A ET AL: "THE SET-TOP BOX FOR INTERACTIVE SERVICES" BT TECHNOLOGY JOURNAL,GB,BT LABORATORIES, vol. 13, no. 4, page 66-77 XP000538881 ISSN: 1358-3948

## Description

The invention to which this application relates is to provide a system to allow a personal computer or organiser device such as, for example, but not exclusively, a hand held or lap top personal computer or personal organiser or device to allow home shopping interaction, hereinafter referred to as a portable device or PDA to be operated in conjunction with a broadcast data receiver and to utilise the data receiver as a communications gateway.

It is well known, and increasingly so, for premises to be equipped with a broadcast data receiver which typically comprises a means for receiving transmitted broadcast data such as video and audio data which is transmitted via satellite, cable or terrestrial broadcast systems and is received by the broadcast data receiver. The broadcast data receiver is then provided with a means for decoding the data and, in connection with a television set or other display means, for generating the display and/or audio sound for viewing. The broadcast data receiver can also be provided with a telecommunications link which allows communication with external data system providers such as the data broadcaster, e-mail services, and the like, as disclosed in BT Technology Journal Vol 13 No 4 October 1995. This document also mentions a proposal for using a PDA as an alternative remote control device for the a broadcast data receiver.

Similarly, US Patent 5831664 allows an external display to be synchronised with a PDA display via a set-top box, the set-top box receiving signals wirelessly from the PDA. The set-top box is connected to a data server which supplies data to the PDA and display as required.

The use of electronic personal organisers in place of conventional paper diaries or record systems, is also increasingly well known and companies such as Psion (RTM) have been developed on the basis of selling said products. The provision of lap top or hand held personal computers is also increasingly prevalent so that more and more of the general population have one or other, or electronic devices for specific functions such as for example ordering shopping from retailers and said electronic equipment being required to be used in their premises. A problem with the personal organiser or lap top or hand held computers in particular is that while the relatively small size of the same is useful in terms of compactness, portability and ease of use, if currently the same are required to be used in conjunction with any other form of equipment, for more comfortable viewing or perhaps greater usage, a physical connection is required to be provided, typically in the form of a cable connection between the PDA and the other equipment such as for example a modem connected to a telephone line into the premises to allow data to be transmitted along the telephone line or to a larger display screen to allow the data to be viewed in a more comfortable manner by a person within the premises. In each case, one, or a number, of physical connections is required to be used. This is time consuming in setting up the connections, can be difficult to achieve if the length of the connections is not sufficient and in general can be irritating to the user of the PDA devices.

The aim of the present invention is to provide a means for utilising the existing broadcast data receiver in a premises to allow the connection with a PDA and without the need for physical connections between the same.

In a first aspect of the invention there is provided a system for receiving and transmitting data, said system comprising:
a broadcast data receiver for receiving and processing data broadcast from a remote location,
a means for establishing a communication link between a service provider and the broadcast data receiver ,
a portable device (16) for the processing of data and reacting to user selections input to the portable device,
the portable device (16) and broadcast data receiver (4) are physically unconnected and provided with communication means to allow the transmission and reception of data signals between the portable device and the broadcast data receiver ,
**characterised in that** the portable device (16) can be used by the user to initiate access to an internet service provider via the communication means, broadcast data receiver, and means for establishing a communication link, said broadcast data receiver and means for establishing a communication link adapted to relay data between the internet service provider and the portable device.

In one embodiment the broadcast data receiver includes a modem and the modem is connected to the means for establishing a communications link which is provided in the form of a telephone line which connects with the external telecommunications network and hence the external data system providers.

In one embodiment the portable device is of a form known as a PDA, such as an electronic personal organiser or laptop computer and the PDA is provided to transmit control signals and/or data to the broadcast data receiver which allows the control of the operation of the receiver with respect to at least the communication with the external data system providers.

In one typical embodiment the external data system or systems provider are internet service providers.

Preferably the means for establishing a communications link between the portable device (PDA) and the broadcast data receiver is an infra red system such that the portable device and broadcast data receiver each include means for generating and receiving and processing infra red data signals.

Typically the portable device can provide and/or receive any of e-mail, fax and telephone messages via the broadcast data receiver and infrared transmission system between the portable device and the receiver and in turn, by the receiver via the telecommunications line and modem. Thus, in effect the user of the portable device can sit in a room with the receiver connected to the telecommunications network and, by making the connection with the external data system providers "surf" the internet on their portable device.

It is also envisaged that in one embodiment, a number of portable devices can be used with respect to a common broadcast data receiver either at different times or at the same time, with each of the portable devices having an identification recognisable by the broadcast data receiver and which enables the receiver to differentiate between portable devices during the reception and transmission of data between the same via the infra red communications link.

In a typical embodiment the portable device includes a display screen. In one embodiment the broadcast data receiver is connected to a screen and allows the display on said screen to be controlled via the portable device.

Typically, the broadcast data receiver acts as a means for establishing a communications link between the portable device and the external data system providers without physical contact or connection between the portable device and the receiver and the portable device is operable in conjunction with the broadcast data receiver when in line of sight of the receiver to allow the infra red signals to be sent and received.

Typically, the broadcast data receiver receives digital data broadcast from a remote location, decodes the same, processes the same for the generation of video, audio and/or text to the user via a display screen and speakers to which the receiver is connected or provided as an integral part thereof. In one embodiment the digital data is processed to form television programmes, teletext, electronic programme guides for display via a television set.

The digital data is broadcast and transmitted via any of satellite, cable or terrestrial broadcast systems and, if the data is transmitted via a satellite transmission system, associated apparatus to receive the data is provided externally of the premises.

Thus there is provided a system which utilises a broadcast data receiver, in addition to its "conventional" function of receiving and processing broadcast data, as a communications gateway for further apparatus and which allows the further apparatus in the form of a portable device which, itself, includes a means for processing data, memory and other functions, to communicate with external data providers via the broadcast data receiver. Furthermore the communication between the portable device and receiver is preferably physically unconnected thereby maintaining the "portability" of the portable device within the premises in which it is being used.

Typically the portable device and broadcast data receiver arc provided with infra red signal transmitting and receiving means to facilitate the sending and receiving of signals between the two devices so that in the broadcast data receiver the control of the modem is achieved and in the portable device the selection and commencement of any or any combination of arranged functions can be achieved such as, for example, web browsing, E-mail generation and receipt, internet access and IP telephone systems. The provision of this infra-red connection between the portable device and the broadcast data receiver eliminates the need for physical connection between the two and also means that the modem, which is typically conventionally provided within the broadcast data receiver in any case, can be used for an additional function. This also means that an additional modem is not required for the operation of the portable device, the inconvenience of having to trail a physical connection from the PDA to a telephone socket is eliminated, the need for multiple adaptors at the master socket is eliminated and the potential for overloading the REN at the master socket of the telephone system is overcome as the existing telephone connection between the broadcast data receiver and the master socket in the premises is used.

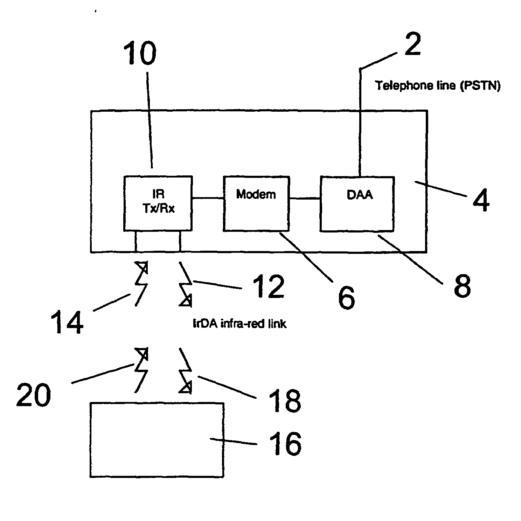

A specific embodiment of the invention is now described with reference to the accompanying drawing, wherein it illustrates in schematic fashion a system in accordance with the invention wherein there is shown a telephone line 2 connected to a master socket (not shown) at one end and to a broadcast data receiver 4 at the other end. The telephone line is in connection with the modem 6 in the broadcast data receiver via DAA 8 and the modem 6 is in turn controlled to respond to an infra red processor 10 which has an output 12 and receiving pass 14 as shown. A portable device (PDA) 16 is shown which may be, for example a personal organiser and is provided with infra red input 18 and output 20 paths so as to allow the transmission and receipt of infra red signals to and from the broadcast data receiver and thereby achieving the operation, control and selection of the function of the PDA and broadcast data receiver.

Typically the serial port interface of the modem is connected to an infra red Tx/Rx interface as shown. The infra red interface should preferably correspond to the IrDA standard which is a multi-layer, connection or entered packet base standard which specifies physical layer, LAP layer and LMP layer.

In order to allow the devices to be compatible the PDA implements a compatible streaming interface to that of the broadcast data receiver and operates a dummy serial port driver which connects to the IrDA port. A modem driver is provided in the PDA 16 and is configured to suit the specification of the modem 6 used in the broadcast data receiver so as to allow the same to be compatible.

Conventionally the broadcast data receiver is provided with means, not shown, which allow for primary purpose of the apparatus to be performed, namely the reception of digital data which is broadcast from a remote location and received by, for example, a satellite antenna mounted externally of the premises and connected by cable to the broadcast data receiving apparatus provided internally of the premises. The broadcast data receiver then processes the data into television programmes, teletext, or electronic programme guides or the like for display, typically via a television set, not shown, to which the broadcast data receiver is connected or may alternatively be provided as an integral part thereof. The user can then control the broadcast data receiver to select the television programmes which they wish to watch.

However, the broadcast data receiver also has a use in accordance with the current invention as a communications gateway for further apparatus. Thus, in use, if the user of a portable device wishes to access, for example, the internet from a premises, they can do so by bringing their portable device into "sight" of the broadcast data receiver 4. When in sight the user can generate an appropriate access code via infra red signal to the broadcast data receiver. The receiver processes the signal and controls the modem to make connection via the telephone line 2, to a designated internet provider. When connection is made, data is provided from this external data system provider and transmitted for display, either via the broadcast data receiver to a display screen connected thereto or, more likely, via the broadcast data receiver and infra red signal transmission, to the portable device for display on a screen provided as part of the device. From then on further control signals and data can be transmitted as and when required.

## Claims

1. A system for receiving and transmitting data, said system comprising:
a broadcast data receiver (4) for receiving and processing data broadcast from a remote location,
a means for establishing a communication link between a service provider and the broadcast data receiver ,
a portable device (16) for the processing of data and reacting to user selections input to the portable device,
the portable device (16) and broadcast data receiver (4) are physically unconnected and provided with communication means to allow the transmission and reception of data signals between the portable device and the broadcast data receiver ,
**characterised in that** the portable device (16) can be used by the user to initiate access to an internet service provider via the communication means, broadcast data receiver, and means for establishing a communication link, said broadcast data receiver and means for establishing a communication link adapted to relay data between the internet service provider and the portable device.

2. A system according to Claim 1 **characterised in that** the means for establishing a communication link is provided in the form of a modem (6) in the broadcast data receiver (4) connectable to a telephone line (2) and hence to an external telecommunications network.

3. A system according to Claim 1 **characterised in that** the portable device (16) is adapted to transmit control signals and/or data to the broadcast data receiver (4) which is adapted to allow the control of the operation of the broadcast data receiver (4) with respect to at least the communication with the remote data system.

4. A system according to claim 1 **characterised in that** the communication means between the portable device and the broadcast data receiver is an infra red system.

5. A system according to claim 4 **characterised in that** the portable device and broadcast data receiver each include means for generating and receiving and processing infra red data signals.

6. A system according to claim 4 **characterised in that** the portable device can provide and/or receive any of e-mail, fax and telephone messages via the broadcast data receiver (4) by the infrared transmission system between the portable device and the broadcast data receiver and in turn, by the broadcast data receiver (4) via the means for establishing a communication link.

7. A system according to claim 1 **characterised in that** the portable device (16) includes a display screen.

8. A system according to claim 5 **characterised in that** the portable device (16) is adapted to allow for the transmission of data from the portable device to the broadcast data receiver (4) which in turn is connected to a screen and is adapted to allow the display on said screen to be controlled via the portable device (16).

9. A system according to claim 1 wherein the portable device can communicate with the broadcast data receiver when the portable device is in line of sight of the broadcast data receiver.

10. A system to claim 1 **characterised in that** the broadcast data receiver is capable of receiving digital data broadcast from a remote location, decoding the same, and processing the same for the generation of video, audio and/or text to the user via a display screen and speakers.

11. A system according to claim 10 **characterised in that** the broadcast data receiver is capable of processing the digital data to form television programmes, teletext, and/or electronic programme guides for display via a television set.

12. A system according to claim 10 **characterised in that** the broadcast data receiver is capable of receiving digital data broadcast and transmitted via any of satellite, cable or terrestrial broadcast systems.

## Patentansprüche

1. System zum Empfangen und Senden von Daten, wobei das genannte System Folgendes umfasst:
einen Rundfunkdatenempfänger (4) zum Empfangen und Verarbeiten von Daten, die von einer fernen Stelle ausgestrahlt wurden;
ein Mittel zum Herstellen einer Kommunikationsverbindung zwischen einem Diensteanbieter und dem Rundfunkdatenempfänger,
ein tragbares Gerät (16) zum Verarbeiten von Daten und zum Reagieren auf in das tragbare Gerät eingegebene Benutzerselektionen,
wobei das tragbare Gerät (16) und der Rundfunkdatenempfänger (4) physisch unverbunden und mit Kommunikationsmitteln versehen sind, so dass Datensignale zwischen dem tragbaren Gerät und dem Rundfunkdatenempfänger gesendet und empfangen werden können,
**dadurch gekennzeichnet, dass** das tragbare Gerät (16) vom Benutzer verwendet werden kann, um Zugang zu einem Internetdiensteanbieter über die Kommunikationsmittel, den Rundfunkdatenempfänger und das Mittel zum Herstellen einer Kommunikationsverbindung einzuleiten, wobei der genannte Rundfunkdatenempfänger und das Mittel zum Herstellen einer Kommunikationsverbindung die Aufgabe haben, Daten zwischen dem Intemetdiensteanbieter und dem tragbaren Gerät zu übermitteln.

2. System nach Anspruch 1, **dadurch gekennzeichnet, dass** das Mittel zum Herstellen einer Kommunikationsverbindung in Form eines Modems (6) im Rundfunkdatenempfänger (4) vorliegt, der mit einer Telefonleitung (2) und somit mit einem externen Telekommunikationsnetz verbunden werden kann.

3. System nach Anspruch 1, **dadurch gekennzeichnet, dass** das tragbare Gerät (16) so ausgelegt ist, dass es Steuersignale und/oder Daten zum Rundfunkdatenempfänger (4) sendet, der so ausgelegt ist, dass der Betrieb des Rundfunkdatenempfängers (4) mit Bezug auf wenigstens die Kommunikation mit dem Femdatensystem gesteuert werden kann.

4. System nach Anspruch 1, **dadurch gekennzeichnet, dass** das Kommunikationsmittel zwisschen dem tragbaren Gerät und dem Rundfunkdatenempfänger ein Infrarotsystem ist.

5. System nach Anspruch 4, **dadurch gekennzeichnet, dass** das tragbare Gerät und der Rundfunkdatenempfänger jeweils Mittel zum Erzeugen und Empfangen und Verarbeiten von Infrarot-Datensignalen beinhalten.

6. System nach Anspruch 4, **dadurch gekennzeichnet, dass** das tragbare Gerät mittels des Infrarot-Übertragungssystems Email-, Telefax- und/oder Telefonmeldungen über den Runddatenempfänger (4) zwischen dem tragbaren Gerät und dem Rundfunkdatenempfänger und wiederum mittels des Rundfunkdatenempfängers (4) über das Mittel zum Herstellen einer Kommunikationsverbindung senden und/oder empfangen kann.

7. System nach Anspruch 1, **dadurch gekennzeichnet, dass** das tragbare Gerät (16) einen Anzeigeschirm aufweist.

8. System nach Anspruch 5, **dadurch gekennzeichnet, dass** das tragbare Gerät (16) so ausgelegt ist, dass Daten von dem tragbaren Gerät zu dem Rundfunkdatenempfänger (4) übertragen werden können, der wiederum mit einem Bildschirm verbunden und so ausgelegt ist, dass die Anzeige auf dem genannten Bildschirm über das tragbare Gerät (16) gesteuert werden kann.

9. System nach Anspruch 1, wobei das tragbare Gerät mit dem Rundfunkdatenempfänger kommunizieren kann, wenn das tragbare Gerät in Sichtlinie des Rundfunkdatenempfängers ist.

10. System nach Anspruch 1, **dadurch gekennzeichnet, dass** der Rundfunkdatenempfänger von einer fernen Stelle ausgestrahlte digitale Daten empfangen, dekodieren und zur Erzeugung von Video, Audio und/oder Text zum Benutzer über einen Anzeigeschirm und Lautsprecher verarbeiten kann.

11. System nach Anspruch 10, **dadurch gekennzeichnet, dass** der Rundfunkdatenempfänger die digitalen Daten verarbeiten kann, um Fernsehprogramme, Teletext und/oder elektronische Programmführer zur Anzeige auf einem Fernsehapparat verarbeiten kann.

12. System nach Anspruch 10, **dadurch gekennzeichnet, dass** der Rundfunkdatenempfänger über Satelliten-, Kabel- und/oder terrestrische Rundfunksysteme ausgestrahlte und gesendete digitale Daten empfangen kann.

## Revendications

1. Système de réception et de transmission de données, ledit système comprenant :
un récepteur de données diffusées (4) servant à recevoir et à traiter des données diffusées à partir d'un lieu distant,
des moyens pour établir une liaison de communication entre un prestataire de services et le récepteur de données diffusées,
un dispositif portable (16) servant à traiter les données et à réagir à la saisie des sélections de l'utilisateur sur le dispositif portable,
le dispositif portable (16) et le récepteur de données diffusées (4) ne sont pas connectés sur le plan physique et sont dotés de moyens de communication pour permettre la transmission et la réception de signaux de données entre le dispositif portable et le récepteur de données diffusées,
**caractérisé en ce que** le dispositif portable (16) peut être utilisé par l'utilisateur pour amorcer l'accès à un prestataire de services internet par l'intermédiaire des moyens de communication, du récepteur de données diffusées, et des moyens pour établir une liaison de communication, ledit récepteur de données diffusées et lesdits moyens pour établir une liaison de communication étant adaptés pour relayer des données entre le prestataire de services internet et le dispositif portable.

2. Système selon la revendication 1, **caractérisé en ce que** les moyens pour établir une liaison de communication se présentent sous la forme d'un modem (6) monté dans le récepteur de données diffusées (4) apte à être connecté à une ligne téléphonique (2) et par conséquent à un réseau de télécommunications extérieur.

3. Système selon la revendication 1, **caractérisé en ce que** le dispositif portable (16) est adapté pour transmettre des signaux de commande et/ou des données au récepteur de données diffusées (4) lequel est adapté pour permettre la commande du fonctionnement du récepteur de données diffusées (4) avec le système de données distantes en ce qui concerne au moins la communication.

4. Système selon la revendication 1, **caractérisé en ce que** les moyens de communication entre le dispositif portable et le récepteur de données diffusées est un système infrarouge.

5. Système selon la revendication 4, **caractérisé en ce que** le dispositif portable et le récepteur de données diffusées comportent chacun des moyens servant à générer et à recevoir et à traiter les signaux de données infrarouges.

6. Système selon la revendication 4, **caractérisé en ce que** le dispositif portable peut fournir et/ou recevoir l'un quelconque des messages suivants, à savoir par courriel, par télécopie et par téléphone, par l'intermédiaire du récepteur de données diffusées (4) grâce au système de transmission infrarouge prévu entre le dispositif portable et le récepteur de données diffusées et à son tour, grâce au récepteur de données diffusées (4) par l'intermédiaire des moyens pour établir une liaison de communication.

7. Système selon la revendication 1, **caractérisé en ce que** le dispositif portable (16) comporte un afficheur.

8. Système selon la revendication 5, **caractérisé en ce que** le dispositif portable (16) est adapté pour permettre la transmission de données à partir du dispositif portable vers le récepteur de données diffusées (4) qui à son tour est connecté à un écran et qui est adapté de façon à ce que l'affichage sur ledit écran soit piloté par l'intermédiaire du dispositif portable (16).

9. Système selon la revendication 1, **caractérisé en ce que** le dispositif portable peut communiquer avec le récepteur de données diffusées lorsque le dispositif portable se trouve en visibilité directe avec le récepteur de données diffusées.

10. Système selon la revendication 1, **caractérisé en ce que** le récepteur de données diffusées est capable de recevoir des données numériques diffusées à partir d'un lieu distant, de décoder celles-ci, et de traiter celles-ci afin de générer pour l'utilisateur des fonctions vidéo, audio et/ou texte par l'intermédiaire d'un écran de visualisation et de haut-parleurs.

11. Système selon la revendication 10, **caractérisé en ce que** le récepteur de données diffusées est capable de traiter les données numériques afin de constituer des programmes télévisés, le service Teletext et/ou des guides de programme électroniques en vue d'une visualisation via un téléviseur.

12. Système selon la revendication 10, **caractérisé en ce que** le récepteur de données diffusées est capable de recevoir des données numériques lesquelles sont diffusées et transmises par l'un quelconque des systèmes de diffusion suivants, à savoir un système satellitaire, à câble ou terrestre.
